# FASCICULE DE BREVET EUROPEEN

(11) **EP 1 869 499 B1**
(45) Date de publication et mention de la délivrance du brevet: **15.05.2013**
(21) Numéro de dépôt: 05815036.8
(22) Date de dépôt: 27.10.2005
(51) Int. Cl.: G01T 1/24, G01T 1/29

(54) **CIRCUIT DE DÉTECTION DE PARTICULES AVEC DES CIRCUITS ÉLÉMENTAIRES CONSTITUANT DES SOUS-PIXELS**
SCHALTKREIS ZUR DETEKTION VON TEILCHEN MIT EINZEL-SCHALTKREISEN, DIE UNTER-PIXEL DARSTELLEN
PARTICLE-DETECTION CIRCUIT COMPRISING BASIC CIRCUITS FORMING SUBPIXELS

(30) Priorité: 05.11.2004 FR 0411794
(43) Date de publication de la demande: 26.12.2007
(73) Titulaire: Commissariat à l'Énergie Atomique et aux Énergies Alternatives, 75015 Paris (FR)
(72) Inventeur: ROSTAING, Jean-Pierre, F-38260 La Cote Saint Andre (FR); BILLOINT, Olivier, F-38000 Grenoble (FR); AUDEBERT, Patrick, F-38760 VARCES ALLIERES ET RISSET (FR); GLASSER, Francis, F-38320 Eybens (FR)
(74) Mandataire: Hecké, Gérard
(86) Numéro de dépôt international: PCT/FR2005/002694
(87) Numéro de publication internationale: WO 2006/051179

(56) Documents cités:
- EP-A- 1 424 568
- US-B1- 6 424 750

## Description

### Domaine technique de l'invention

L'invention concerne un circuit de détection de particules comportant une pluralité de circuits élémentaires, comportant chacun un élément détecteur de particules connecté à des moyens de comptage associés délivrant des signaux de comptage représentatifs du nombre de particules détectées par l'élément détecteur correspondant.

### État de la technique

De nombreux dispositifs de formation d'images, notamment dans le domaine de la radiologie (radiographie, radioscopie) utilisent des circuits de détection de particules (photons X ou gamma) comportant des circuits élémentaires, disposés sous forme de matrice de lignes et de colonnes et correspondant chacun à un pixel. Certains fonctionnent par intégration de charges électriques et leur dynamique est limitée, vers le bas, par le bruit thermique (typiquement de l'ordre de 100µV en valeur efficace) et, vers le haut, par la tension d'alimentation (par exemple de l'ordre de 1 V). D'autres fonctionnent par comptage d'événements et sont donc limités par les caractéristiques du compteur, notamment par sa capacité.

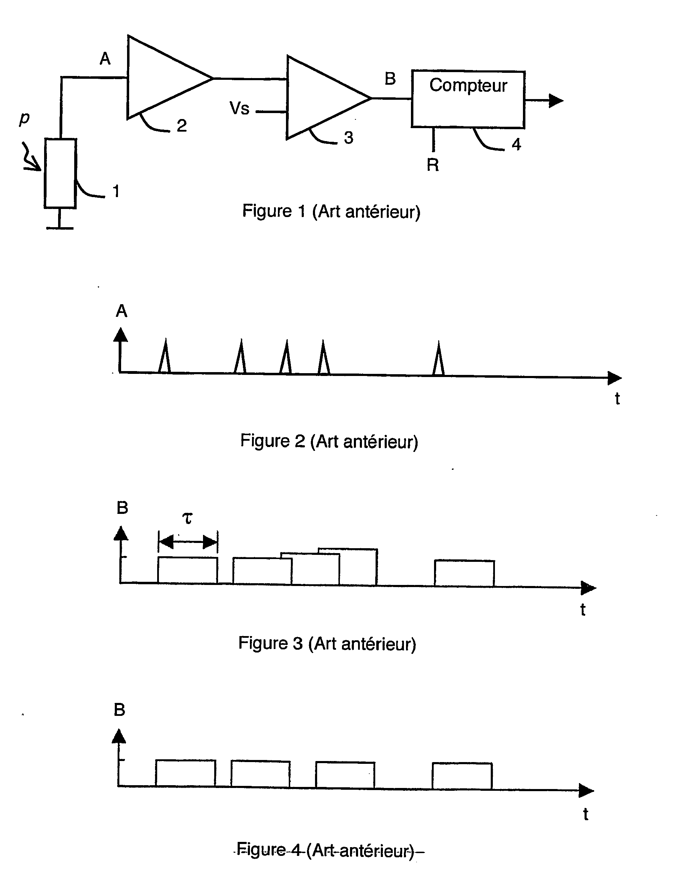

Comme représenté à la figure 1, un circuit de détection classique comporte un élément détecteur 1, transformant les particules *p*-détectées en impulsions électriques. La sortie de l'élément détecteur 1 est connectée, généralement par l'intermédiaire d'un préamplificateur 2 à faible bruit, à une entrée d'un comparateur 3, dont une autre entrée est connectée à une tension de seuil Vs. Le comparateur 3 fournit ainsi un signal binaire à l'entrée de comptage d'un compteur 4 chaque fois que la détection d'une particule produit une impulsion d'amplitude suffisante. Le compteur 4 fournit ainsi en sortie des signaux binaires représentatifs du nombre de particules détectées par l'élément détecteur 1. Classiquement, le compteur 4 comporte une entrée R de remise à zéro. La résolution spatiale du circuit est définie par le pixel, qui correspond à un point élémentaire de la matrice et de l'image.

Les figures 2 à 4 illustrent le comportement temporel de circuits de détection selon l'art antérieur. Sur la figure 2 sont représentées les impulsions A de sortie de l'élément détecteur du circuit de détection selon la figure 1, chaque impulsion correspondant à la détection d'une particule incidente. L'ensemble de la chaîne de traitement, du détecteur au compteur, nécessite un temps de traitement τ, lié au temps de transit des porteurs dans l'élément détecteur 1 et au temps de traitement des circuits électroniques, classiquement appelé temps de service ou temps mort, pendant lequel le système n'est pas disponible. Tant que le temps mort τ est négligeable eu égard au flux de particules λ, c'est-à-dire, lorsque τ<<1/λ, le circuit de détection détecte correctement toutes les particules. Par contre, lorsque le temps mort τ n'est pas négligeable vis-à-vis du flux de particules λ, c'est-à-dire, lorsque l'inéquation τ<<1/λ n'est plus vérifiée, le taux de comptage, correspondant au nombre de particules incidentes réellement comptées par le compteur 4 diminue jusqu'à paralyser le système, comme représenté sur la figure 3, qui représente les signaux B en sortie du comparateur 3 d'un circuit de détection selon la figure 1 d'un système paralysable. En effet, si une particule est détectée par l'élément détecteur 1 pendant le temps de traitement de la détection de la particule précédente, le circuit de détection ignore la dernière particule détectée. Il y a alors empilement. Ce phénomène est plus précoce dans un système paralysable (figure 3) que dans un système non paralysable (figure 4).

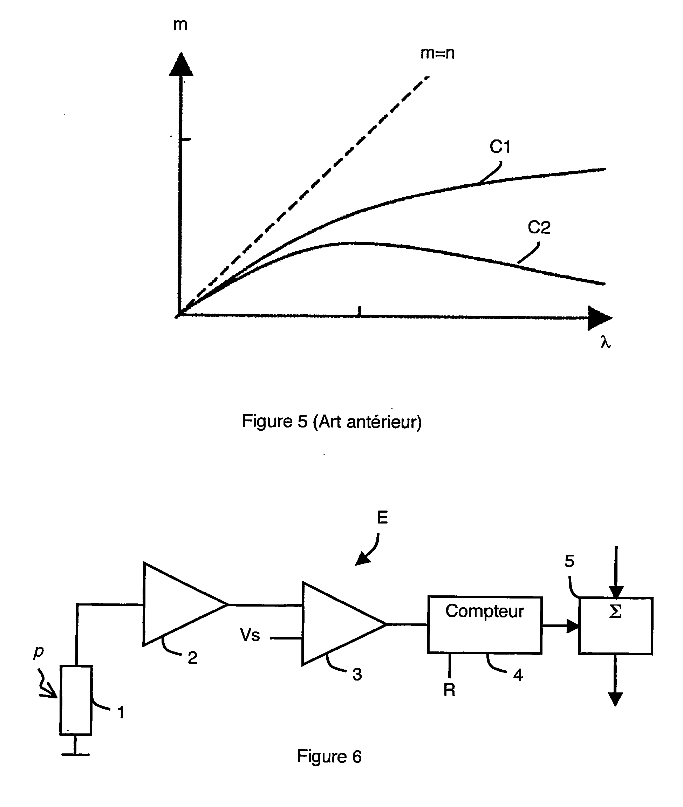

On peut montrer que le nombre m de particules comptées est fonction du nombre n de particules incidentes et du temps mort τ introduit par le circuit. Ainsi, pour un système paralysable m=ne^{-nτ}, tandis que pour un système non paralysable m=n/(1+nτ). La figure 5 illustre les variations du nombre m de particules comptées en fonction du flux λ de particules incidentes détectées par l'élément détecteur 1, respectivement dans un système non paralysable (courbe C1) et dans un système paralysable (courbe C2). La droite en pointillé représente le cas théorique dans lequel toutes les particules incidentes détectées sont comptées (m=n).

Le document EP-A-1424568 divulgue un détecteur de particules avec une résolution spatiale standard pour un flux de particules moyen à fort et un regroupement de pixels, utilisant des portes logiques OU disposées en amont des compteurs associés aux éléments détecteurs, pour augmenter le rapport signal / bruit dans le cas de faibles flux (image bruitée). Dans le premier cas, le détecteur est sensible à l'empilement d'événements et dans le second cas, la résolution spatiale est dégradée. Dans tous les cas, le temps mort est inchangé et le détecteur ne fonctionne pas correctement lorsque le flux de particules est très élevé.

### Objet de l'invention

L'invention a pour but de remédier aux inconvénients des circuits de détection connus et, plus particulièrement, de permettre la détection de flux élevés de particules avec une bonne résolution spatiale.

Selon l'invention, ce but est atteint par le fait que chaque circuit élémentaire comporte un circuit de sommation ayant des première et seconde entrées et une sortie, la première entrée du circuit de sommation d'un circuit élémentaire étant connectée à la sortie des moyens de comptage associés, un nombre prédéterminé de circuits élémentaires constituant un pixel dans lequel les circuits de sommation sont connectés en série, entre une entrée du pixel, constituée par la seconde entrée du circuit de sommation d'un premier circuit élémentaire du pixel, et une sortie du pixel, constituée par la sortie du circuit de sommation d'un dernier circuit élémentaire du pixel et fournissant des signaux de comptage représentatifs du nombre de particules détectées par l'ensemble des circuits élémentaires du pixel.

Selon un développement de l'invention, chaque circuit élémentaire comporte des moyens de mise à zéro sélective de la première entrée du circuit de sommation correspondant.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 illustre un circuit de détection selon l'art antérieur.
Les figures 2 à 4 illustrent les signaux obtenus respectivement en sortie de l'élément détecteur (figure 2) et en sortie du comparateur (figure 3 pour des systèmes paralysables et figure 4 pour des systèmes non paralysables) de circuits de détection selon l'art antérieur.
La figure 5 illustre les variations du nombre m de particules comptées en fonction du flux λ de particules incidentes détectées par l'élément détecteur dans un circuit de détection selon l'art antérieur.
La figure 6 représente un mode particulier de réalisation d'un circuit élémentaire d'un circuit de détection selon l'invention.
Les figures 7 et 8 illustrent deux exemples de connexion en série des circuits de sommation de 16 circuits élémentaires d'un pixel d'un circuit de détection selon l'invention.
La figure 9 représente une variante de réalisation d'un circuit élémentaire d'un circuit de détection selon l'invention, permettant de sélectionner une partie des circuits élémentaires d'un pixel et d'inhiber les autres.
Les figures 10 et 11 illustrent la partie sélectionnée de deux pixels, formés de circuits élémentaires selon la figure 9.
La figure 12 illustre, en fonction du nombre K de cellules élémentaires d'un pixel, les variations du rapport m/n, entre le nombre m de particules comptées et le nombre n de particules incidentes, respectivement avec un circuit de détection selon l'invention (courbe C3) et avec un circuit de détection selon le document EP-A-1424568 (courbe C4).
La figure 13 représente un exemple particulier de disposition de 4 pixels de 4 circuits élémentaires d'un circuit de détection selon l'invention, permettant de définir deux résolutions spatiales, allant du simple au quadruple.
La figure 14 illustre schématiquement les connexions électriques des entrées et sorties des pixels du circuit selon la figure 13.
La figure 15 représente un mode particulier de disposition de 4 pixels d'un circuit de détection selon l'invention.

### Description de modes particuliers de réalisation

Comme représenté à la figure 6, chaque circuit élémentaire E d'un circuit de détection selon l'invention comporte au moins un élément détecteur 1 et un compteur 4, de préférence connectés, comme sur la figure 1, par l'intermédiaire d'un préamplificateur 2 et d'un comparateur 3, ainsi q'un circuit de sommation 5, comportant des première et seconde entrées et une sortie. Les signaux de comptage, fournis en sortie du compteur 4 et représentatifs du nombre de particules *p* détectées par l'élément détecteur correspondant 1, sont appliqués à la première entrée du circuit de sommation 5 correspondant.

Un circuit de détection comporte une pluralité de circuits élémentaires E constituant un pixel dans lequel les circuits de sommation sont connectés en série entre une entrée du pixel, constituée par la seconde entrée du circuit de sommation 5 d'un premier circuit élémentaire du pixel, et une sortie du pixel, constituée par la sortie du circuit de sommation d'un dernier circuit élémentaire du pixel. La seconde entrée du premier circuit élémentaire d'un pixel est connectée à zéro, tandis que la seconde entrée du circuit de sommation 5 de chacun des autres circuits élémentaires du pixel est connectée à la sortie du circuit de sommation 5 du circuit élémentaire précédent. La sortie du circuit de sommation du dernier circuit élémentaire du pixel constitue alors la sortie du pixel et fournit des signaux de comptage représentatifs du nombre de particules incidentes détectées par l'ensemble des circuits élémentaires E du pixel.

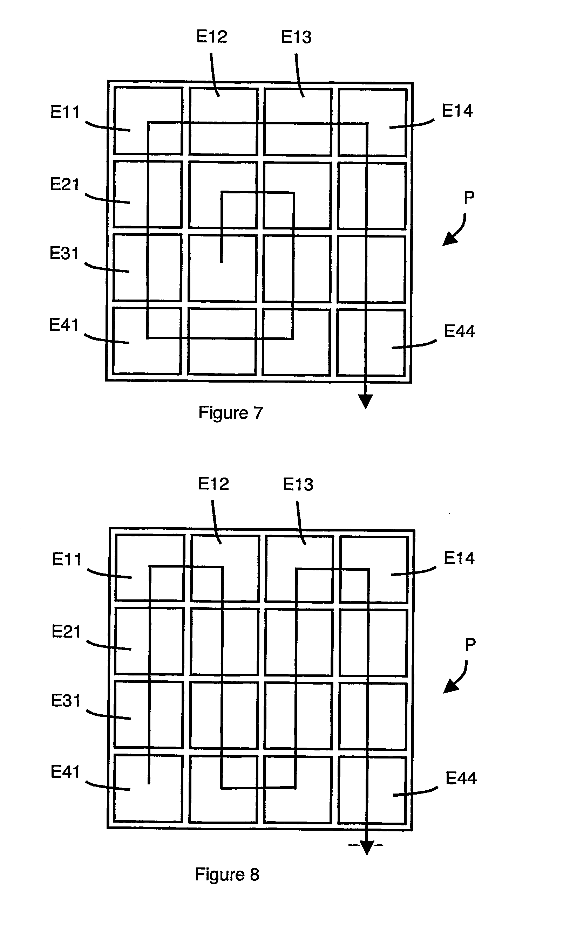

Sur la figure 7, 16 circuits élémentaires forment une matrice de 4 lignes et de 4 colonnes, chaque circuit élémentaire Eij étant repéré par ses indices de ligne i et de colonne j. Dans l'exemple de la figure 7, le premier circuit élémentaire du pixel est le circuit élémentaire E32. La sortie de son circuit de sommation 5 est connectée à la seconde entrée du circuit de sommation 5 du dernier circuit élémentaire E44 du pixel par l'intermédiaire des circuits de sommation, connectés en série, des circuits élémentaires E22, E23, E33, E43, E42, E41, E31, E21, E11, E12, E13, E14, E24 et E34, formant ainsi un trajet en spirale, qui ne traverse qu'une seule fois chaque circuit élémentaire E. La seconde entrée du circuit de sommation du circuit élémentaire E32 est connectée à zéro.

Dans la variante représentée à la figure 8, le premier circuit élémentaire du pixel est le circuit élémentaire E41. La sortie de son circuit de sommation 5 est connectée à la seconde entrée du circuit de sommation 5 du dernier circuit élémentaire E44 du pixel par l'intermédiaire des circuits de sommation, connectés en série, des circuits élémentaires E31, E21, E11, E12, E22, E32, E42, E43, E33, E23, E13, E14, E24 et E34, formant ainsi un autre trajet qui ne traverse qu'une seule fois chaque circuit élémentaire E. La seconde entrée du circuit de sommation du circuit élémentaire E41 est connectée à zéro.

Bien entendu, le trajet peut être quelconque, à condition de passer une seule fois par chacun des circuits élémentaires du pixel. Cette structure en cascade permet de parcourir tous les circuits élémentaires, qui forment des sous-pixels, et d'additionner le contenu de tous les compteurs. On obtient ainsi, à la sortie du circuit de sommation du dernier circuit élémentaire du pixel, la somme du contenu de tous les compteurs, représentative du nombre de particules incidentes détectées par l'ensemble des éléments détecteurs 1 de tous les circuits élémentaires considérés. L'ensemble des circuits élémentaires ainsi connectés définit un pixel, c'est-à-dire un point du circuit de détection qui fournit une information de comptage ponctuelle, qui peut être transférée par un bus et utilisée pour constituer une image finale. La taille de chaque pixel définit la résolution spatiale du circuit de détection et donc de l'image finale. Pour atteindre une résolution spatiale élevée, les pixels sont de petites dimensions et le circuit électronique de détection peut alors être réalisé par un circuit intégré spécifique (ASIC).

Chaque pixel est ainsi divisé en K sous-pixels (K=16 sur les figures 7 et 8). Ainsi le flux λ de particules atteignant le pixel est divisé par K au niveau de chaque sous-pixel, c'est-à-dire au niveau de chaque circuit élémentaire E, où il est réduit à λ/K. Dans chaque circuit élémentaire E, le temps mort τ, lié au temps de transit des porteurs dans l'élément détecteur 1 et au temps de traitement des circuits électroniques, est à comparer à K/λ et non plus à 1/λ. Le temps mort τ est, de ce fait d'autant plus facilement négligeable que le nombre K de cellules élémentaires constituant un pixel est grand. En effet, il est alors plus facile de vérifier l'inégalité τ<<K/λ. En pratique, tout se passe comme si le temps mort τ d'un pixel qui n'aurait comporté qu'une seule chaîne de comptage avait été divisé par K. Ceci permet de retarder considérablement le phénomène d'empilement décrit ci-dessus au regard des figures 3 et 4.

La résolution du circuit de détection n'est donc plus limitée par le flux de particules à gérer. La division des pixels en sous-pixels et, en conséquence, la diminution de la taille des circuits élémentaires, qui constituent des sous-pixels et non des pixels permettent, pour une même résolution spatiale, de diminuer artificiellement la quantité d'impulsions à gérer pendant un temps donné par chaque circuit élémentaire. L'invention ne consiste cependant pas seulement à réduire le pas de la matrice de circuits élémentaires, mais, de plus, à les regrouper pour ne fournir qu'un seul signal représentatif du pixel initial. De plus, pour écarter les contraintes liées à la durée des impulsions, la sommation se fait à partir des signaux de comptage délivrés par chacun des circuits élémentaires. Il est ainsi possible de mesurer un flux de particules beaucoup plus élevé qu'avec les circuits de détection connus, d'autant plus que les compteurs 4 des circuits élémentaires sont remis à zéro à une cadence, par exemple de l'ordre de 100µs, très inférieure à la durée des impulsions, qui est typiquement de l'ordre de 20 à 30ns

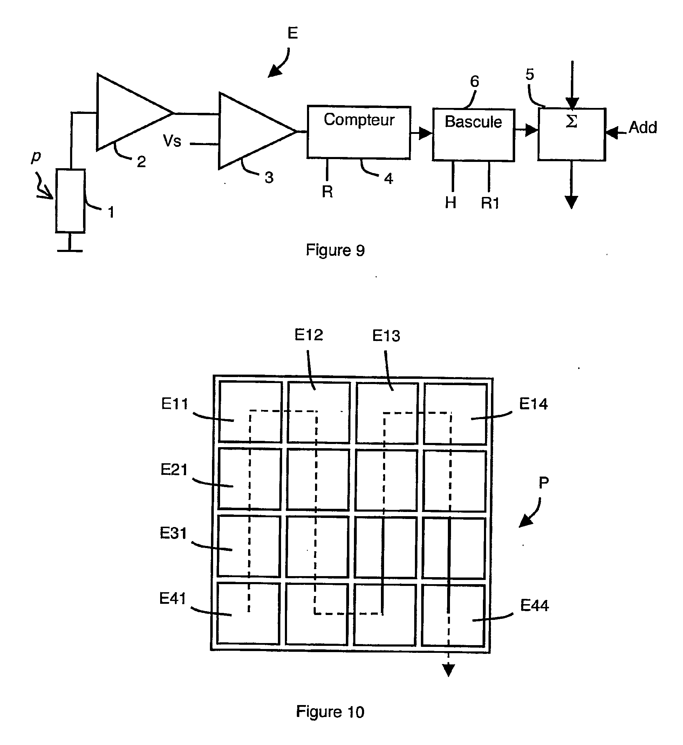

Dans la variante de réalisation représentée à la figure 9, chaque circuit élémentaire E comporte, de plus, une mémoire tampon 6, connectée entre la sortie du compteur 4 et la première entrée du circuit de sommation 5 correspondant. La mémoire tampon 6 comporte, de préférence, une entrée de maintien H et une entrée R1 de remise à zéro. Les entrées R, H et R1 sont contrôlées par un circuit de contrôle central, non représenté. En fonctionnement normal, la mémoire tampon 6 stocke le contenu du compteur 4 et le transfère au circuit de sommation 5.

L'entrée de maintien H permet de séparer le fonctionnement en amont et en aval de la mémoire tampon 6. Ainsi, une séquence de comptage dans le circuit élémentaire concerné peut reprendre immédiatement après transfert des données du compteur 5 dans la mémoire tampon 6, indépendamment de la séquence d'addition dans le pixel E. Cette séquence d'addition est, de préférence contrôlée par des entrées d'addition Add des circuits de sommation 5, connectées au circuit de contrôle central. Il est ainsi possible de minimiser le temps mort de comptage.

L'entrée R1 de remise à zéro de la mémoire tampon 6 permet, quant à elle, de mettre sélectivement à zéro le contenu et, en conséquence, la sortie de la mémoire tampon 6. Ceci provoque alors la mise à zéro de la première entrée du circuit de sommation 5 correspondant connecté en aval. Les signaux de sortie de ce circuit de sommation 5 sont alors identiques aux signaux appliqués sur sa seconde entrée. Ce circuit de sommation 5 est ainsi transparent. Il est ainsi possible, par programmation, de ne sélectionner, parmi les circuits élémentaires E d'un pixel dont tous les circuits de sommation sont, comme précédemment, connectés en série, qu'une partie de ces circuits (dont l'entrée R1 est inactive, c'est-à-dire dont la sortie de la mémoire tampon 6 n'est pas mise à zéro) et d'inhiber les autres (dont l'entrée R1 est active et provoque la mise à zéro de la sortie de la mémoire tampon 6), qui deviennent transparents. Les signaux de comptage en sortie du pixel ne prennent alors en compte que les particules détectées par les circuits élémentaires sélectionnés (entrée R1 inactive) et ignorent les particules détectées par les circuits élémentaires transparents (entrée R1 active). Le trajet de l'addition est ainsi programmable, l'inhibition de certains circuits élémentaires ,du pixel, par mise à zéro sélective de la première entrée de leur circuit de sommation 5, permettant de ne compter que les particules détectées par certaines zones du pixel.

La mémoire tampon 6 peut être réalisée au moyen d'un ensemble de points mémoire en série ou en parallèle, en fonction de l'architecture des compteurs 4 et des circuits de sommation 5. Chaque point mémoire peut, par exemple, être réalisé par une capacité précédée d'un interrupteur qui vient échantillonner son entrée sur un des fronts d'un signal binaire appliqué sur l'entrée de maintien H. Le contenu de ce point mémoire peut être réinitialisé, c'est-à-dire remis au niveau logique zéro, par l'intermédiaire d'un signal de remise à zéro appliqué sur l'entrée R1 de remise à zéro, sans contrainte de synchronisation.

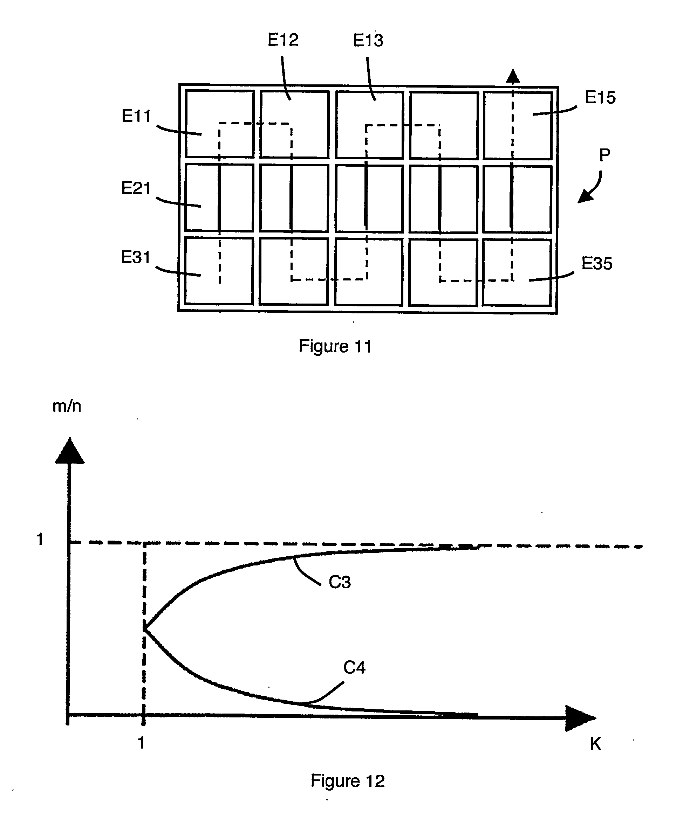

Les figures 10 et 11 illustrent deux pixels formés de circuits élémentaires selon la figure 9, dont seule une partie est sélectionnée. Le trajet de sommation comporte ainsi une partie sélectionnée (schématisés par des traits pleins sur les figures 10 et 11) et des circuits élémentaires transparents (schématisés par des pointillés). A titre d'exemple, le pixel selon la figure 10 est analogue au pixel selon la figure 8, mais seuls les quatre circuits élémentaires du quadrant inférieur droit, E43, E33, E34 et E44, sont sélectionnés (leurs entrées R1 sont inactives). Les entrées R1 de remise à zéro des mémoires tampon des circuits élémentaires E11, E12, E13, E14, E21, E22, E23, E24, E31, E32, E41 et E42 sont actives, de manière à rendre transparents les circuits élémentaires correspondants.

Le nombre et la disposition des circuits élémentaires .d'un pixel P peuvent être quelconques. La figure 11 illustre, par exemple, un pixel P rectangulaire, constitué par 3 lignes de 5 circuits élémentaires, constituant ainsi une matrice de 3x5 circuits élémentaires, E11 à E35. Le trajet de sommation connecte successivement, dans l'exemple représenté à la figure 11, les circuits de sommation des circuits élémentaires E31, E21, E11, E12, E22, E32, E33, E23, E13, E14, E24, E34, E35, E25 et E15. Pour observer uniquement la ligne centrale du pixel, seuls les circuits élémentaires E21, E22, E23, E24 et E25 de la ligne centrale du pixel sont sélectionnés (entrées R1 inactives), tous les autres circuits élémentaires (E11, E12, E13, E14, E15, E31, E32, E33, E34 et E35) étant rendus transparents par activation des entrées R1 correspondantes.

L'efficacité du comptage d'un circuit de détection selon l'invention est illustrée à la figure 12. La courbe C3 représente, en fonction du nombre K de cellules élémentaires d'un pixel, les variations du rapport m/n, entre le nombre de particules comptées et le nombre de particules incidentes, dans un circuit de détection selon l'invention. Cette courbe montre que l'efficacité du comptage augmente avec le nombre de sous-pixels d'un pixel, contrairement à ce qui se passe pour un groupement de pixels dans un circuit de détection selon le document EP-A-1424568 (courbe C4).

Par ailleurs, dans le circuit de détection décrit ci-dessus, la sommation des particules en aval des compteurs 4 procure à chaque sous-pixel le même poids dans la somme finale, qui constitue ainsi une somme uniforme des flux reçus par les différentes cellules élémentaires d'un même pixel.

Au contraire dans le document précité, la sommation du nombre de particules détectées par un regroupement de pixels est réalisée au moyen d'une porte logique OU disposée directement à la sortie du comparateur de chaque pixel, c'est-à-dire en amont du compteur correspondant. Ceci provoque une augmentation du débit au fur et à mesure que l'on va vers le pixel aval. Ce phénomène masque progressivement la prise en compte de la détection de particules issues des pixels aval par rapport aux pixels amont. Le résultat final est donc une somme pondérée des flux reçus par les différents pixels, affectés de coefficients dégressifs, de l'amont vers l'aval.

De manière connue, il peut être souhaitable de regrouper un certain nombre de pixels. Il est alors possible de passer d'un circuit de détection dans lequel tous les pixels sont indépendants à un circuit de détection dans lequel un certain nombre de pixels sont connectés en série. Dans ce cas, la résolution spatiale du circuit de détection est réduite en conséquence.

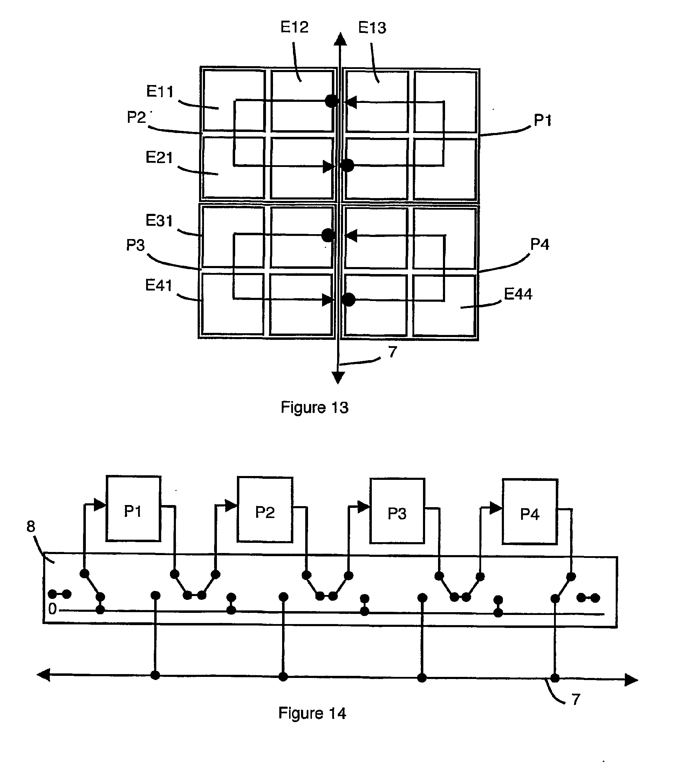

Sur la figure 13, quatre pixels indépendants P1 à P4 sont disposés de part et d'autre d'un bus 7. L'entrée de chaque pixel (schématisée par un rond) est, comme précédemment, connectée à zéro, tandis que sa sortie (schématisée par une flèche) est connectée au bus 7. Dans un mode de réalisation préférentiel, pour s'adapter au flux de particules et pour passer d'une résolution à l'autre, le circuit de détection est muni de commutateurs 8, contrôlés par le circuit de contrôle, non représenté, permettant ainsi de connecter à volonté les différents pixels. Le trajet de sommation à l'intérieur de chaque pixel est, de préférence, tel que l'entrée et la sortie du pixel soient toutes deux disposées d'un même côté, ou côté d'accès, du pixel, à proximité du bus central 7. Ainsi, sur la figure 13, les entrées et sorties des pixels P2 et P3 sont toutes alignées dans la colonne 2, sur la gauche du bus 7, tandis que les entrées et sorties des pixels P1 et P4 sont toutes alignées dans la colonne 3, sur la droite du bus.

Comme illustré à la figure 14, des commutateurs permettent de connecter sélectivement l'entrée de chaque pixel à zéro ou à la sortie du pixel précédent et d'autres commutateurs permettent de connecter sélectivement la sortie de chaque pixel au bus 7 ou à l'entrée du pixel suivant. Dans l'exemple illustré à la figure 14, l'entrée du pixel P1, constituant l'entrée du regroupement de pixels, est connectée à zéro, tandis que la sortie du pixel P4, constituant la sortie du regroupement de pixels, est connectée au bus 7. Simultanément les sorties des pixels, P1, P2 et P3 sont respectivement connectées aux entrées des pixels suivants P2, P3 et P4. La résolution spatiale du regroupement est alors égale au quart de la résolution spatiale du circuit de détection selon la figure 13, constitué par 4 pixels indépendants.

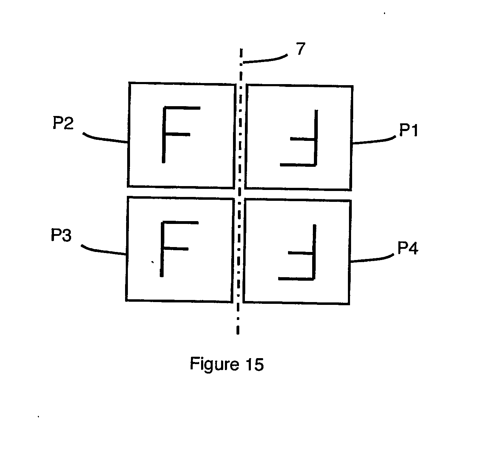

Une disposition appropriée de quatre pixels P1 à P4 permettant de passer d'une résolution standard, dans laquelle tous les pixels sont indépendants, à un regroupement de pixels, ayant une résolution réduite, est représentée à la figure 15. N étant un nombre pair, les quatre pixels (P1 à P4), ayant chacun N/2xN/2 circuits élémentaires, sont disposés de part et d'autre du bus 7. L'ensemble forme ainsi un carré de N² circuits élémentaires. Les quatre pixels peuvent être indépendants ou regroupés, par des commutateurs 8, pour former un regroupement de pixels de résolution réduite.

Plus généralement, plusieurs pixels peuvent être répartis sous forme d'une matrice symétrique par rapport au bus 7. Sur les figures 13 et 15, les pixels P2 et P3 sont disposés respectivement en haut et en bas sur la gauche du bus 7, tandis que les pixels P1 et P4 sont disposés respectivement en haut et en bas sur la droite du bus 7. La liaison série entre les circuits de sommation 6 des circuits élémentaires E d'un pixel P définit le trajet de sommation du pixel. Sur la figure 15, le trajet de sommation du pixel P3 (représenté schématiquement par un F) est obtenu par translation, parallèlement au bus 7, du trajet de sommation du pixel P2 et réciproquement. Les trajets de sommation des pixels P1 et P4 (représentés schématiquement par un F inversé) sont obtenus par rotation de 180°, respectivement à partir des pixels P2 et P3. De façon générale, le trajet de sommation d'un pixel de la matrice peut être obtenu par translation, symétrie axiale ou rotation de 180° à partir du trajet de sommation d'un autre pixel de, la matrice. Cette symétrie permet notamment de simplifier la fabrication d'un circuit de détection comportant un grand nombre de pixels et de modifier selon les besoins la résolution spatiale du circuit.

Le circuit de détection selon l'invention est utilisable dans tout type d'imageur pixelisé, notamment à résolution spatiale multiple. Il est plus particulièrement destiné à être utilisé
- lorsque le flux de particules est élevé (λ≈1/τ) et que l'obtention d'un taux de pertes minimal est une priorité (imagerie médicale) ou
- lorsque le flux est faible (λ<<1/τ) et que la recherche d'un temps mort minimal est primordiale (astrophysique).

## Revendications

1. Circuit de détection de particules comportant une pluralité de circuits élémentaires (E), comportant chacun un élément (1) détecteur de particules (p) connecté à des moyens de comptage (4) associés délivrant des signaux de comptage représentatifs du nombre de particules détectées par l'élément détecteur correspondant, circuit **caractérisé en ce que** chaque circuit élémentaire (E) comporte un circuit de sommation (5) ayant des première et seconde entrées et une sortie, la première entrée du circuit de sommation (5) d'un circuit élémentaire (E) étant connectée à la sortie des moyens de comptage (4) associés, un nombre prédéterminé de circuits élémentaires (E) constituant un pixel (P) dans lequel les circuits de sommation (5) sont connectés en série, entre une entrée du pixel, constituée par la seconde entrée du circuit de sommation d'un premier circuit élémentaire du pixel, et une sortie du pixel, constituée par la sortie du circuit de sommation d'un dernier circuit élémentaire du pixel et fournissant des signaux de comptage représentatifs du nombre de particules détectées par l'ensemble des circuits élémentaires du pixel (P).

2. Circuit selon la revendication 1, **caractérisé en ce que** chaque circuit élémentaire (E) comporte des moyens (6, R1) de mise à zéro sélective de la première entrée du circuit de sommation (5) correspondant.

3. Circuit selon la revendication 2, **caractérisé en ce que** les moyens de mise à zéro comportent une mémoire tampon (6), connectée entre la sortie des moyens de comptage (4) et la première entrée du circuit de sommation (5) correspondant, et une entrée (R1) de remise à zéro de ladite mémoire tampon (6).

4. Circuit selon l'une quelconque des revendications 1 à 3, **caractérisé en ce qu'**il comporte des moyens de commutation (8) destinés à connecter sélectivement l'entrée d'un pixel à zéro ou à la sortie d'un pixel précédent.

5. Circuit selon la revendication 4, **caractérisé en ce qu'**il comporte des moyens de commutation (8) destinés à connecter sélectivement la sortie d'un pixel à un bus (7) ou à l'entrée du pixel suivant.

6. Circuit selon l'une quelconque des revendications 1 à 5, **caractérisé en ce que** l'entrée d'un pixel (P) est connectée à zéro, tandis que sa sortie est connectée à un bus (7).

7. Circuit selon la revendication 5, **caractérisé en ce qu'**au moins deux pixels (P1, P2, P3, P4) sont connectés en série par les moyens de commutation (8) entre zéro et ledit bus (7).

8. Circuit selon l'une quelconque des revendications 1 à 7, **caractérisé en ce que**, les circuits élémentaires (Eij) d'un pixel étant disposés sous forme d'une matrice de lignes (i) et de colonnes (j), l'entrée et la sortie d'un pixel sont disposées d'un même côté d'accès du pixel.

9. Circuit selon l'une quelconque des revendications 1 à 8, **caractérisé en ce que**, N étant un nombre pair, quatre pixels (P1 à P4), comportant chacun N/2xN/2 circuits élémentaires, sont disposés de part et d'autre d'un bus (7).

10. Circuit selon l'une quelconque des revendications 1 à 9, **caractérisé en ce qu'**il comporte une pluralité de pixels (P1 à P4), répartis sous forme d'une matrice symétrique par rapport à un bus (7) et **en ce que**, la liaison série entre les circuits de sommation des circuits élémentaires d'un pixel définissant un trajet de sommation du pixel, le trajet de sommation d'un pixel est obtenu par translation, symétrie axiale ou rotation de à partir du trajet de sommation d'un autre pixel.

## Patentansprüche

1. Schaltkreis zur Detektion von Teilchen mit einer Vielzahl von Einzelschaltkreisen (E), die jeweils ein Detektorelement (1) für Teilchen (*p*) aufweisen, das mit zugehörigen Zähleinrichtungen (4) verbunden ist, die Zählsignale liefern, welche repräsentativ sind für die Anzahl der von dem entsprechenden Detektorelement erfassten Teilchen, wobei der Schaltkreis **dadurch gekennzeichnet ist, dass** jeder Einzelschaltkreis (E) einen Summierschaltkreis (5) mit einem ersten und einem zweiten Eingang und einem Ausgang besitzt, wobei der erste Eingang des Summierschaltkreises (5) eines Einzelschaltkreises (E) mit dem Ausgang der zugehörigen Zähleinrichtungen (4) verbunden ist, wobei eine vorgegebene Anzahl von Einzelschaltkreisen (E) ein Pixel (P) darstellt, in dem die Summierschaltkreise (5) in Reihe geschaltet sind, zwischen einem Pixeleingang, der durch den zweiten Eingang des Summierschaltkreises eines ersten Einzelschaltkreises des Pixels gebildet ist, und einem Pixelausgang, der durch den Ausgang des Summierschaltkreises eines letzten Einzelschaltkreises des Pixels gebildet ist, und Zählsignale liefert, die repräsentativ sind für die Anzahl der von der Gesamtheit der Einzelschaltkreise des Pixels (P) erfassten Teilchen.

2. Schaltkreis nach Anspruch 1, **dadurch gekennzeichnet, dass** jeder Einzelschaltkreis (E) Einrichtungen (6, R1) zum selektiven Zurücksetzen auf Null des ersten Eingangs des entsprechenden Summierschaltkreises (5) besitzt.

3. Schaltkreis nach Anspruch 2, **dadurch gekennzeichnet, dass** die Einrichtungen zum Zurücksetzen auf Null einen Pufferspeicher (6) aufweisen, der zwischen dem Ausgang der Zähleinriclrtungen (4) und dem ersten Eingang des entsprechenden Summierschaltkreises (5) und einem Eingang (R1) für das Zurücksetzen auf Null des Pufferspeichers (6) angeschlossen ist.

4. Schaltkreis nach einem der Ansprüche 1 bis 3, **dadurch gekennzeichnet, dass** er Schaltelemente (8) aufweist, die dazu dienen, den Eingang eines Pixels selektiv auf Null zu schalten oder an den Ausgang eines vorhergehenden Pixels abzuschließen.

5. Schaltkreis nach Anspruch 4, **dadurch gekennzeichnet, dass** er Schaltelemente (8) aufweist, die dazu dienen, den Ausgang eines Pixels an einen Bus (7) oder an den Eingang des nachfolgenden Pixels anzuschließen.

6. Schaltkreis nach einem der Ansprüche 1 bis 5, **dadurch gekennzeichnet, dass** der Eingang eines Pixels (P) auf Null geschaltet ist, während sein Ausgang an einen Bus (7) angeschlossen ist.

7. Schaltkreis nach Anspruch 5, **dadurch gekennzeichnet, dass** mindestens zwei Pixel (P1, P2, P3, P4) zwischen Null und dem Bus (7) durch die Schaltelemente (8) in Reihe geschaltet sind.

8. Schaltkreis nach einem der Ansprüche 1 bis 7, **dadurch gekennzeichnet, dass**, wenn die Einzelschaltkreise (Eij) eines Pixels in Form einer Matrix von Zeilen (i) und Spalten (j) angeordnet sind, der Eingang und der Ausgang eines Pixels auf derselben Zugangsseite des Pixels angeordnet sind.

9. Schaltkreis nach einem der Ansprüche 1 bis 8, **dadurch gekennzeichnet, dass**, wenn N eine gerade Zahl ist, vier Pixel (P1 bis P), die jeweils N/2xN/2 Einzelschaltkreise aufweisen, zu beiden Seiten eines Bus (7) angeordnet sind.

10. Schaltkreis nach einem der Ansprüche 1 bis 9, **dadurch gekennzeichnet, dass** er eine Vielzahl von Pixeln (P1 bis P4) aufweist, die in Form einer symmetrischen Matrix gegenüber dem Bus (7) verteilt sind, und dass man, da die serielle Verbindung zwischen den Summierschaltkreisen der Einzelschaltkreise eines Pixels einen Summierweg des Pixels bildet, den Summierweg eines Pixels durch Translation, axiale Symmetrie oder Drehung um ausgehend von dem Summierweg eines anderen Pixels erhält.

## Claims

1. Particle detection circuit comprising a plurality of basic circuits (E) each comprising a particle (p) detection element (1) connected to associated counting means (4) delivering counting signals representative of the number of particles detected by the corresponding detection element, circuit **characterized in that** each basic circuit (E) comprises a summing circuit (5) having first and second inputs and an output, the first input of the summing circuit (5) of a basic circuit (E) being connected to the output of the associated counting means (4), a preset number of basic circuits (E) constituting a pixel (P) in which the summing circuits (5) are connected in series between an input of the pixel, formed by the second input of the summing circuit of a first basic circuit of the pixel, and an output of the pixel, formed by the output of the summing circuit of a last basic circuit of the pixel and supplying counting signals representative of the number of particles detected by all the basic circuits of the pixel (P).

2. Circuit according to claim 1, **characterized in that** each basic circuit (E) comprises selective resetting means (6, R1) for reset of the first input of the corresponding summing circuit (5).

3. Circuit according to claim 2, **characterized in that** the resetting means comprise a buffer memory (6) connected between the output of the counting means (4) and the first input of the corresponding summing circuit (5), and a resetting input (R1) for reset of said buffer memory (6).

4. Circuit according to any one of claims 1 to 3, **characterized in that** it comprises switching means (8) designed to selectively connect the input of a pixel to zero or to the output of a previous pixel.

5. Circuit according to claim 4, **characterized in that** it comprises switching means (8) designed to selectively connect the output of a pixel to a bus (7) or to the input of the next pixel.

6. Circuit according to any one of claims 1 to 5, **characterized in that** the input of a pixel (P) is connected to zero, whereas its output is connected to a bus (7).

7. Circuit according to claim 5, **characterized in that** at least two pixels (P1, P2, P3, P4) are connected in series by the switching means (8) between zero and said bus (7).

8. Circuit according to any one of claims 1 to 7, **characterized in that**, the basic circuits (Eij) of a pixel being arranged in the form of a matrix of lines (i) and columns (j), the input and output of a pixel are arranged on the same access side of the pixel.

9. Circuit according to any one of claims 1 to 8, **characterized in that**, N being an even number, four pixels (P1 to P4), each comprising N/2xN/2 basic circuits, are arranged on each side of a bus (7).

10. Circuit according to any one of claims 1 to 9, **characterized in that** it comprises a plurality of pixels (P1 to P4) arranged in the form of a symmetrical matrix with respect to a bus (7), and **in that** the series connection between the summing circuits of the basic circuits of a pixel defining a summing path of the pixel, the summing path of a pixel is obtained by translation, axial symmetry or 180°rotation from the summing path of another pixel.
